(19) Europäisches Patentamt

European Patent Office

Office européen des brevets

(11) **EP 1 436 713 B1**

(12) **FASCICULE DE BREVET EUROPEEN**

(45) Date de publication et mention
de la délivrance du brevet:
**19.01.2005 Bulletin 2005/03**

(21) Numéro de dépôt: **02801364.7**

(22) Date de dépôt: **11.10.2002**

(51) Int Cl.$^7$: **G06F 13/38**, H04L 7/033

(86) Numéro de dépôt international:
**PCT/FR2002/003478**

(87) Numéro de publication internationale:
**WO 2003/034246 (24.04.2003 Gazette 2003/17)**

(54) **DISPOSITIF DE TRANSMISSION DE DONNEES ASYNCHRONES COMPRENANT DES MOYENS DE CONTROLE DE DEVIATION D'HORLOGE**

ASYNCHRONE DATENÜBERTRAGUNGSANORDNUNG MIT STEUERUNGSMITTEL FÜR TAKTABWEICHUNGEN

ASYNCHRONOUS DATA TRANSMISSION DEVICE COMPRISING CLOCK DEVIATION CONTROL MEANS

(84) Etats contractants désignés:
**DE FR GB IT**

(30) Priorité: **15.10.2001 FR 0113269**

(43) Date de publication de la demande:
**14.07.2004 Bulletin 2004/29**

(73) Titulaire: **STMicroelectronics
92120 Montrouge (FR)**

(72) Inventeurs:
• **RUAT, Ludovic
F-13119 Saint Savourin (FR)**
• **KINOWSKI, Paul
F-13100 Aix-en-Provence (FR)**
• **CZAJOR, Alexander
F-13320 Bouc Bel Air (FR)**

(74) Mandataire: **Marchand, André
OMNIPAT,
24 Place des Martyrs de la Résistance
13100 Aix-en-Provence (FR)**

(56) Documents cités:
**EP-A- 0 413 073          EP-A- 1 126 618
US-A- 5 299 237**

## Description

La présente invention concerne les transmissions de données asynchrones, et les dispositifs de transmission de données asynchrones généralement appelés des "UARTs" (Universal Asynchronous Receiver Transceiver).

La présente invention concerne notamment un dispositif de transmission de données asynchrones comprenant un registre de réception de données relié à une borne de réception de données et cadencé par un signal d'échantillonnage synchronisé à un signal d'horloge local.

Les transmissions de données asynchrones consistent généralement dans la transmission de caractères de 8 bits précédés chacun d'un bit de "start" (bit de démarrage) et suivis d'un bit de stop. A l'inverse des transmissions de données synchrones, le récepteur ne reçoit pas le signal d'horloge de l'émetteur, de sorte que les horloges respectives de l'émetteur et du récepteur doivent présenter l'une relativement à l'autre une déviation n'excédant pas une certaine valeur, pour que les données puissent être transmises correctement.

Afin d'augmenter les possibilités de transfert de données asynchrones entre dispositifs présentant des circuits d'horloge peu précis et susceptibles de présenter de fortes dérives avec le temps et la température, on a récemment développé des protocoles de transmission de données permettant à un récepteur de caler son signal d'horloge sur celui d'un émetteur grâce à l'envoi par ce dernier d'un caractère de synchronisation. De tels protocoles sont par conséquent moins exigeants en ce qui concerne la déviation du signal d'horloge du récepteur relativement à celui de l'émetteur.

Dans ce qui suit, on désignera par "signal d'horloge local" le signal d'horloge du récepteur et "signal d'horloge de référence" le signal d'horloge du dispositif qui émet un caractère de synchronisation.

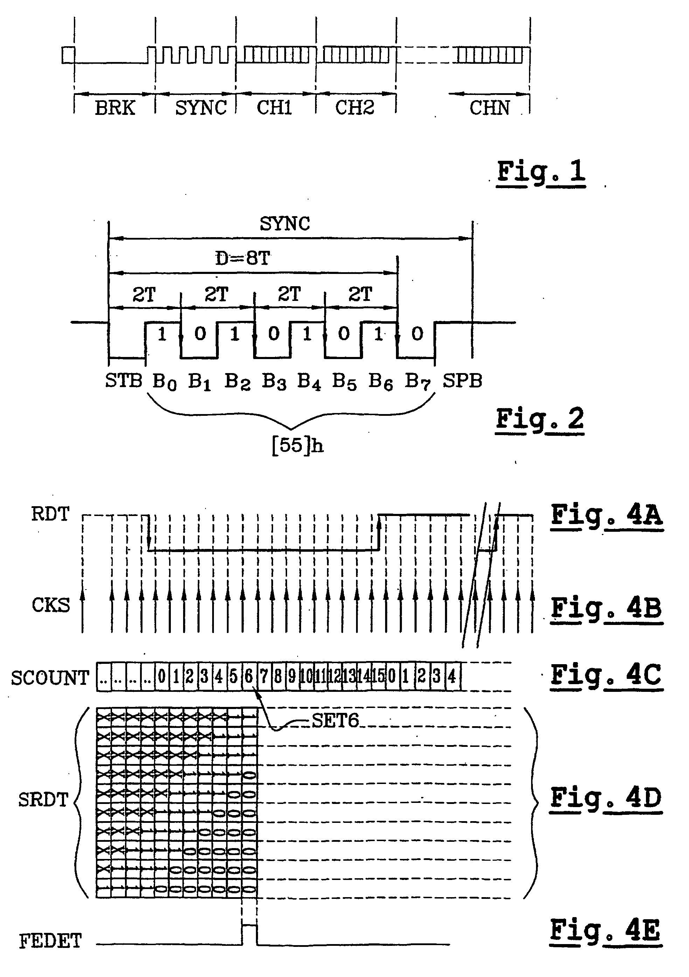

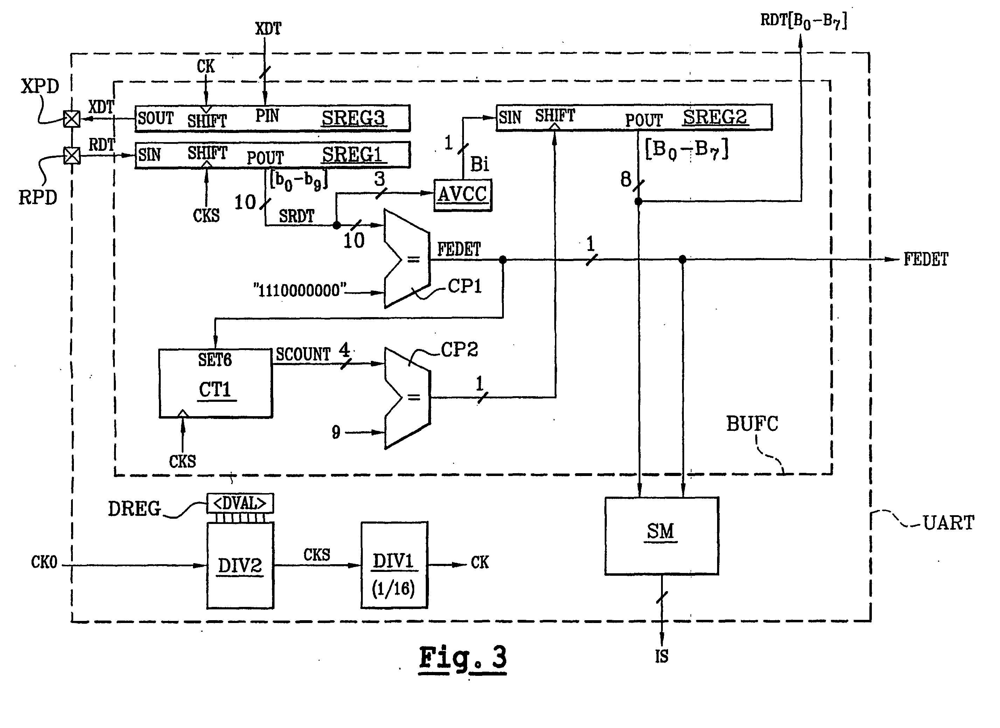

Pour fixer les idées, la figure 1 représente le format d'une trame asynchrone selon le protocole LIN ("Local Interconnect Network", protocole disponible sur le site "http://www.lin-subbus.org"). Cette trame comprend tout d'abord un caractère de "break" BRK (caractère d'arrêt) comprenant un nombre déterminé de bits à 0 et un dernier bit égal à 1 ("extra bit"), puis un caractère de synchronisation SYNC, et ensuite des caractères de données CH1, CH2...CH$_N$. Le caractère CH1 est utilisé comme champ d'identification pour permettre des liaisons multipoint entre un dispositif maître et des dispositifs esclaves.

Le caractère SYNC est représenté plus en détail en figure 2 et est égal à [55]h en notation hexadécimale, soit le caractère "10101010" en binaire (bits B0 à B7). Ce caractère de synchronisation étant précédé d'un bit de start STB à 0 et suivi d'un bit de stop à 1, on dispose en tout de 5 fronts descendants pour accorder un signal d'horloge local au signal d'horloge de référence du caractère SYNC. La durée s'écoulant entre les 5 fronts descendants étant égale à 8 fois la période T du signal d'horloge de référence, la mesure de cette durée permet d'en déduire la période de référence T et d'y accorder celle du signal d'horloge local.

La figure 3 représente de façon schématique l'architecture d'un circuit UART permettant de synchroniser un signal d'horloge local CK sur le signal d'horloge d'un caractère SYNC. Le signal d'horloge local CK est délivré par un diviseur DIV1, généralement un diviseur par 16, recevant en entrée un signal d'échantillonnage CKS. Le signal CKS est lui-même délivré par un diviseur programmable DIV2 recevant en entrée un signal d'horloge primaire CKO. Le rapport entre la fréquence du signal CK0 et celle du signal CKS est déterminé par une valeur DVAL chargée dans un registre DREG du diviseur programmable.

Le circuit UART comprend un circuit tampon BUFC et une machine d'état SM qui identifie les caractères de break et de synchronisation, et délivre des signaux d'information IS au milieu extérieur. Le "milieu extérieur"- est par exemple une architecture de microcontrôleur (non représentée) au sein de laquelle le circuit UART est implanté. Les signaux IS indiquent par exemple qu'un caractère SYNC est en cours de réception, qu'une donnée reçue est disponible en lecture dans le circuit BUFC, etc..

Le circuit tampon BUFC comprend ici deux registres de réception SREG1, SREG2, un registre d'émission SREG3, un compteur CT1 de 4 bits (compteur par 16), deux comparateurs logiques CP1, CP2 et un circuit AVCC. Le registre SREG1 est un registre à décalage de 10 bits dont l'entrée SHIFT est cadencée par le signal CKS. Il reçoit des données RDT sur une entrée série SIN connectée à une borne de réception de données RPD, et délivre sur une sortie parallèle POUT des données SRDT échantillonnées (bits b0 à b9). Les données SRDT sont appliquées à l'entrée du circuit AVCC dont la sortie délivre un bit Bi qui est envoyé sur une entrée série SIN du registre SREG2. Chaque bit Bi délivré par le circuit AVCC est classiquement égal à la valeur majoritaire des échantillons de rangs 7, 8 et 9 (bits b7 à b9) présents dans le registre SREG1.

Les données SRDT sont également appliquées sur une entrée du comparateur CP1 dont l'autre entrée reçoit un nombre de référencé "1110000000", formant un critère de détection de front descendant. Le comparateur CP1 délivre un signal FEDET qui est communiqué au milieu extérieur et est également appliqué sur une entrée de remise à 6 (entrée "SET6") du compteur CT1, lequel est cadencé par le signal CKS. Le compteur CT1 délivre un signal SCOUNT de comptage d'échantillons qui est appliqué sur une entrée du comparateur CP2, dont l'autre entrée reçoit sous forme binaire un nombre de référence égal à 9 en base 10. La sortie du comparateur CP2 pilote l'entrée de décalage SHIFT du registre SREG2. Enfin, le registre SREG3 est un registre à décalage cadencé par le signal d'horloge local CK, recevant des données XDT sur une entrée parallèle PIN et délivrant des données série XDT sur une sortie SOUT connectée à une borne XPD

La détection par le circuit UART des fronts descendants d'un caractère SYNC est illustrée sur les figures 4A à 4E, qui représentent respectivement les données RDT, le signal d'échantillonnage CKS, le signal SCOUNT, les données SRDT échantillonnées par le registre SREG1, et le signal FEDET. Le passage à 1 du signal FEDET indique qu'un front descendant est détecté et intervient lorsque les données SRDT sont égales à "1110000000". Les fronts descendants étant détectés après réception de sept échantillons égaux à 0, le compteur CT1 est recalé sur la valeur "6" (soit le septième cycle de comptage à partir de 0) lors du passage à 1 du signal FEDET.

Après réception du caractère SYNC, les données présentes dans les caractères CH1, CH2... sont reçues bit à bit, un bit de donnée Bi délivré par le circuit AVCC (valeur majoritaire des échantillons b7 à b9) étant chargé dans le registre SREG2 tous les 16 cycles du signal CKS, soit à chaque cycle du signal d'horloge local CK. Le chargement d'un bit Bi s'effectue au dixième cycle de comptage du compteur CT1, lorsque la sortie du comparateur CP2 passe à 1. Les données reçues RDT sont stockées dans le registre SREG2 par groupe de 8 bits B0-B7 et peuvent être lues par l'intermédiaire d'une sortie parallèle POUT de ce registre.

En définitive, le caractère SYNC représenté en figure 2 permet à une unité de calcul externe, par exemple l'unité centrale d'un microcontrôleur, de déterminer la valeur DVAL à placer dans le diviseur DIV2 pour compenser une dérive de l'horloge locale relativement à l'horloge de référence. Cette valeur est telle que la période Ts du signal d'échantillonnage CKS doit être égale à :

$$Ts = D/(8*16)$$

D étant la durée mesurée entre les cinq fronts descendants du caractère de synchronisation, soit huit périodes T de l'horloge de référence. Le calcul de DVAL peut être fait par logiciel, ou par un circuit à logique câblée spécifique pouvant être associé à la machine d'état SM.

Malgré les avantages d'un recalage d'horloge grâce au caractère SYNC, il n'est pas exclu en pratique qu'une déviation importante de l'horloge locale compromette la bonne réception des trames asynchrones. Cela est le cas lorsque la déviation de l'horloge locale relativement à l'horloge de référence est supérieure à une marge de tolérance déterminée. Cette marge de tolérance dépend en pratique du nombre de bits à 0 que comprend le caractère de break BRK qui précède le caractère SYNC. Dans le cadre du protocole LIN, cette marge de tolérance est de ±15% car un caractère de break comprend 13 bits à 0 et l'on considère d'autre part que la détection de 11 bits à 0 est suffisante pour détecter le caractère de break. Au-delà de cette marge de tolérance, la réception du caractère break lui-même peut être entachée d'erreur. Par exemple, un récepteur ayant une horloge locale présentant une déviation supérieure à ±15% peut "croire" qu'il reçoit un caractère dé break alors que le caractère reçu est un autre caractère (ou est formé par une suite d'autres caractères). Dans ce cas, un recalage d'horloge basé sur le caractère SYNC peut s'avérer sans effet car la détection même des bits du caractère SYNC est douteuse.

La présente invention vise à pallier cet inconvénient.

Pour atteindre cet objectif, une idée de la présente invention est d'évaluer la déviation d'un signal d'horloge local relativement à un caractère de synchronisation, en comptant le nombre d'impulsions d'échantillonnage intervenant pendant la réception du caractère de synchronisation, puis en comparant ce nombre à des seuils prédéterminés représentatif d'une marge de tolérance.

Une autre idée de la présente invention est d'implanter dans un dispositif UART un circuit à logique câblée effectuant de façon automatique une telle mesure de déviation, et délivrant un drapeau de déviation présentant une valeur déterminée lorsque la déviation mesurée se trouve en dehors de la marge de tolérance.

Ainsi, essentiellement, la présente invention telle que définie dans la revendication indépendante 1 prévoit un dispositif de transmission de données asynchrones comprenant un registre de réception de données relié à une borne de réception de données et cadencé par un signal d'échantillonnage synchronisé à un signal d'horloge local, comprenant un circuit de mesure de déviation d'horloge agencé pour déterminer un nombre M de périodes du signal d'échantillonnage apparaissant pendant K périodes d'un signal de synchronisation reçu sur la borne de réception de données, et pour comparer le nombre M à un seuil inférieur M1 et à un seuil supérieur M2 prédéterminés définissant une marge de tolérance.

Selon un mode de réalisation, le circuit de mesure de déviation d'horloge comprend des moyens pour délivrer un drapeau de déviation ayant une première valeur logique lorsque le nombre M n'est pas compris entre les seuils M1 .et M2 et une seconde valeur logique lorsque le nombre M est compris entre les seuils M1 et M2.

Selon un mode de réalisation, le circuit de mesure de déviation d'horloge comprend des moyens pour délivrer un premier signal logique ayant une valeur logique déterminée lorsque le nombre de périodes du signal de synchronisation est égal à K, des moyens pour délivrer un second signal logique ayant une valeur logique déterminée lorsque le nombre M de périodes du signal d'échantillonnage est compris entre les seuils M1 et M2, et des moyens pour délivrer un troisième signal logique ayant une valeur logique déterminée lorsque le premier et le second signaux logiques présentent respectivement lesdites valeurs déterminées.

Selon un mode de réalisation, le circuit de mesure de déviation d'horloge est agencé pour déterminer un nombre M de périodes du signal d'échantillonnage apparaissant entre deux fronts d'un même type, montant ou descendant, du signal de synchronisation.

Selon un mode de réalisation, le circuit de mesure de déviation d'horloge est agencé pour déterminer un nombre M de périodes du signal d'échantillonnage apparaissant entre deux fronts de type opposé, montant et descendant ou descendant et montant, du signal de synchronisation.

Selon un mode de réalisation, le circuit de mesure de déviation d'horloge comprend des moyens pour vérifier que la détection d'un front montant ou descendant correspond à la réception de plusieurs échantillons du signal de synchronisation ayant une valeur logique majoritaire correspondant au front détecté.

Selon un mode de réalisation, le circuit de mesure de déviation d'horloge est réalisé essentiellement à partir de portes logiques, de bascules, de comparateurs logiques et de compteurs.

Selon un mode de réalisation, le dispositif comprend une machine d'état agencée pour détecter la réception d'un caractère de synchronisation sur la borne de réception et pour activer le circuit de mesure de déviation d'horloge lorsqu'un tel caractère de synchronisation est détecté.

La présente invention concerne également un circuit intégré comprenant un dispositif de transmission de données selon l'invention.

La présente invention concerne également un microcontrôleur comprenant un dispositif de transmission de données selon l'invention.

La présente invention selon le revendication indépendante 11 concerne également un procédé de transmission de données asynchrones, dans lequel des données reçues sur une borne de réception de données sont lues au rythme d'un signal d'échantillonnage synchronisé à un signal d'horloge local, le procédé comprenant une étape de mesure d'une déviation du signal d'horloge local comprenant : la détermination d'un nombre M de périodes du signal d'échantillonnage apparaissant pendant K périodes d'un signal de synchronisation reçu sur la borne de réception de données, et la comparaison du nombre M à un seuil inférieur M1 et à un seuil supérieur M2 prédéterminés définissant une marge de tolérance.

Selon un mode de réalisation, le procédé comprend la délivrance d'un drapeau de déviation ayant une première valeur logique lorsque le nombre M n'est pas compris entre les seuils M1 et M2 et une seconde valeur logique lorsque le nombre M est compris entre les seuils M1 et M2.

Selon un mode de réalisation, le procédé comprend les étapes suivantes : délivrance d'un premier signal logique ayant une valeur logique déterminée lorsque le nombre de périodes du signal de synchronisation est égal à K, délivrance d'un second signal logique ayant une valeur logique déterminée lorsque le nombre M de périodes du signal d'échantillonnage est compris entre lés seuils M1 et M2, et délivrance d'un troisième signal logique ayant une valeur logique déterminée lorsque le premier et le second signaux logiques présentent respectivement lesdites valeurs déterminées.

Selon un mode de réalisation, le procédé comprend une étape de détection de la réception d'un caractère de synchronisation sur la borne de réception et, sur détection de la réception du caractère de synchronisation, le déclenchement d'une étape de détermination d'un nombre M de périodes du signal d'échantillonnage apparaissant pendant K périodes du caractère de synchronisation.

Selon un mode de réalisation, le nombre M de périodes du signal d'échantillonnage est déterminé entre deux fronts d'un même type, montant ou descendant, du signal de synchronisation.

Selon un mode de réalisation, le nombre M de périodes du signal d'échantillonnage est déterminé entre deux fronts de type opposé, montant et descendant ou descendant et montant, du signal de synchronisation.

Selon un mode de réalisation, le procédé comprend la vérification que la détection d'un front montant ou descendant correspond à la réception de plusieurs échantillons du signal de synchronisation ayant valeur logique majoritaire correspondant au front détecté.

Selon un mode de réalisation, le procédé est mis en oeuvre essentiellement au moyen de portes logiques, de bascules, de comparateurs logiques et de compteurs.

Selon un mode de réalisation, le procédé est mis en oeuvre au moyen d'un circuit spécifique à logique câblée implanté dans un dispositif de transmission de données asynchrones.

Ces objets, caractéristiques et avantages ainsi que d'autres de la présente invention seront exposés plus en détail dans la description suivante d'un exemple de réalisation d'un circuit de mesure de déviation selon l'invention, faite à titre non limitatif en relation avec les figures jointes parmi lesquelles :

- la figure 1 précédemment décrite représente schématiquement une trame asynchrone selon le protocole LIN,
- la figure 2 représente un caractère de synchronisation,
- la figure 3 est un schéma bloc d'un circuit UART classique,
- les figures 4A à 4E représentent des signaux électriques ou logiques apparaissant dans le circuit UART de la figure 3 lors de la détection d'un front descendant,
- la figure 5 est le schéma logique d'un circuit UART comprenant un circuit de mesure de déviation d'horloge selon l'invention, représenté sous forme de bloc,
- la figure 6 est le schéma logique d'un élément représenté sous forme de bloc en figure 5,

- la figure 7 est le schéma logique d'un autre élément représenté sous forme de bloc en figure 5,
- les figures 8A à 8K représentent des signaux électriques ou logiques apparaissant dans le circuit de mesure de déviation selon l'invention lorsqu'un signal d'horloge local présente une déviation se trouvant dans une gamme de valeurs autorisées,
- les figures 9A à 9H représentent des signaux électriques ou logiques apparaissant dans le circuit de mesure de déviation selon l'invention lorsqu'un signal d'horloge local présente une déviation se trouvant en dehors d'une gamme de valeurs autorisées, et
- les figures 10A à 10H représentent des signaux électriques ou logiques apparaissant dans le circuit de mesure de déviation selon l'invention lorsqu'un signal d'horloge local présente une déviation se trouvant en dehors d'une gamme de valeurs autorisées.

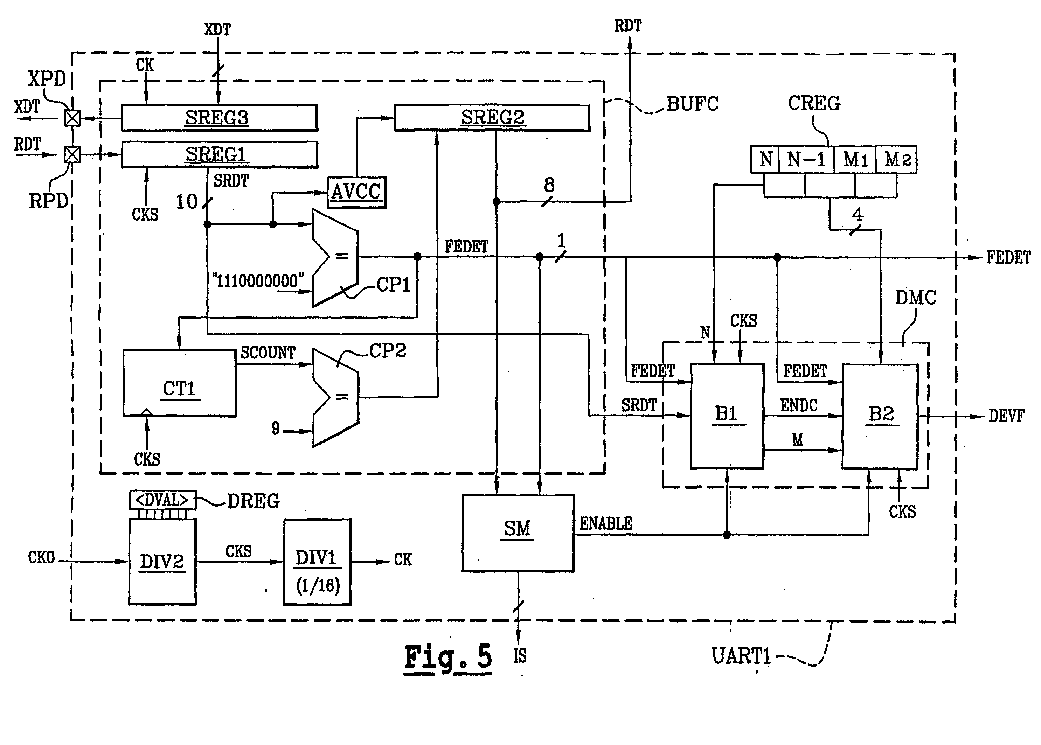

La figure 5 représente un circuit UART1 selon l'invention comprenant un circuit tampon classique BUFC connecté à une borne de réception de données RPD et à une borne d'émission de données XPD, un diviseur DIV1 pour délivrer un signal d'horloge local CK à partir d'un signal d'échantillonnage CKS, un diviseur DIV2 pour délivrer le signal d'échantillonnage CKS à partir d'un signal d'horloge primaire CK0, et une machine d'état SM, ces divers éléments ayant été décrits au préambule. Il sera noté que les diviseurs DIV1, DIV2, bien que représentés ici comme des éléments du circuit UART, peuvent en pratique être.des éléments externes à celui-ci.

Le circuit UART1 comprend en outre un circuit de mesure de déviation DMC selon l'invention, qui reçoit en en entrée le signal FEDET ("front descendant détecté") délivré par le comparateur CP1, ainsi que les données échantillonnées SRDT délivrées par le registre SREG1. Le circuit DMC est activé par le passage à 1 d'un signal ENABLE. Le signal ENABLE passe à 1 lors de la détection du premier front descendant d'un caractère SYNC et reste à 1 pendant la réception du caractère SYNC. Le signal ENABLE est ici délivré par la machine d'état SM mais pourrait également être délivré par un circuit logique interne au circuit DMC, à partir d'un signal ENDBRK (non représenté) émis par la machine d'état lorsque 11 bits à 0 ont été détectés dans le caractère BRK.

Le circuit DMC délivre un drapeau de déviation DEVF normalement à 0, qui passe à 1 lorsqu'une déviation supérieure à un seuil déterminé est détectée. Selon l'invention, le seuil de déviation est déterminé par des nombres ou consignes M1, M2 fournies au circuit DMC, les consignes M1 et M2 étant par exemple stockées dans un registre de contrôle CREG. Des nombres N et N-1 stockés dans le registre CREG sont également fournis au circuit DMC, N désignant un nombre de fronts descendants détectés dans un caractère SYNC.

Le circuit DMC tel que représenté en figure 5 comprend deux blocs logiques B1 B2. Le bloc B1 reçoit en entrée la consigne N, le signal ENABLE, le signal FEDET (1 bit) et les données échantillonnées SRDT (10 bits). Il délivre un signal de comptage M codé sur 8 bits et un signal logique ENDC ("Fin de comptage"). Le bloc B2 reçoit en entrée le signal ENABLE, les consignes N, N-1, M1 et M2, les signaux M, ENDC et FEDET, et délivre le drapeau DEVF.

Dans ce qui suit, un exemple de réalisation du circuit DMC sera décrit en considérant que les nombres M1 et M2 sont respectivement égaux à 114 et 151, et que la consigne N est égale à 5. Les valeurs de M1 et M2 choisies ici correspondent à une déviation maximale de l'ordre de ± 15% du signal d'horloge local CK, conformément aux spécifications du protocole LIN auquel on se réfère ici à titre non limitatif, uniquement à titre d'exemple de réalisation du circuit DMC.

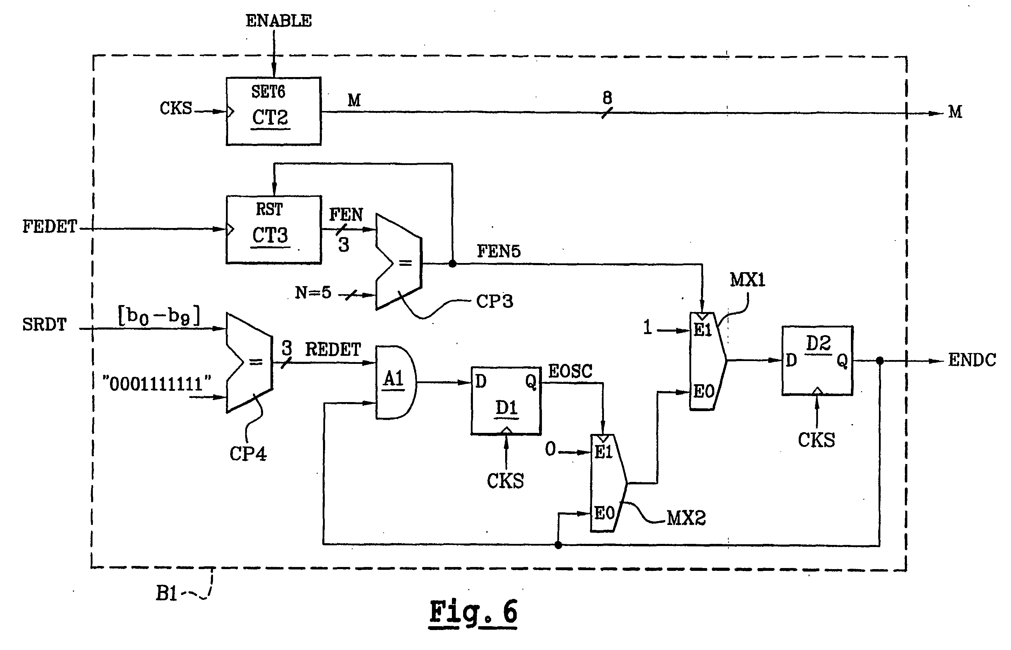

Un exemple de réalisation du bloc B1 est représenté en figure 6. Le bloc B1 comprend les éléments suivants :

- un compteur 8 bits CT2 présentant une entrée d'horloge cadencée par le signal d'échantillonnage CKS, une sortie de comptage, et une entrée "SET6" de remise à 6,
- un compteur 3 bits CT3, présentant une entrée d'horloge cadencée par le signal FEDET, et une sortie de comptage,
- deux comparateurs logiques CP3, CP4 à deux entrées,
- deux multiplexeurs MX1 MX2 comprenant chacun deux entrées de données E0, E1, une entrée de sélection, et une sortie recopiant l'entrée E1 lorsque l'entrée de sélection est à 1 ou recopiant l'entrée E0 lorsque l'entrée de sélection est à 0,
- deux bascules D1, D2 de type D comprenant chacune une entrée D, une sortie Q et une entrée d'horloge (entrée de synchronisation) déclenchée sur front montant et cadencée par le signal d'échantillonnage CKS, et
- une porte ET référencée A1.

Le compteur CT2 reçoit le signal ENABLE sur son entrée SET6 et délivre le signal de comptage M. Le compteur CT3 reçoit le signal FEDET sur son entrée d'horloge et sa sortie délivre un signal FEN ("Nombre de Fronts Descendants") qui est appliqué sur une entrée du comparateur CP3. L'autre entrée du comparateur CP3 reçoit sous forme binaire la consigne N, ici égale à 5. La sortie du comparateur CP3 délivre un signal FEN5 appliqué sur l'entrée de sélection du multiplexeur MX1.

Le comparateur CP4 reçoit sur des entrées les données échantillonnées SRDT et la valeur "0001111111", qui forme un critère de détection d'un front montant. Sa sortie délivre un signal REDET ("Front Montant Détecté") appliqué sur une entrée de la porte A1 dont l'autre entrée reçoit le signal de fin de comptage ENDC. La sortie de la porte A1 est appliquée sur l'entrée D de la bascule D1 dont la sortie Q délivre un signal EOSC ("Fin de Caractère de Synchronisation"). Le signal EOSC est appliqué sur l'entrée de sélection du multiplexeur MX2, dont l'entrée E1 est maintenue à 0 et dont l'entrée E0 reçoit le signal ENDC. La sortie du multiplexeur MX2 est appliquée sur l'entrée E0 du multiplexeur MX1 dont l'entrée E est maintenue à 1. La sortie du multiplexeur MX1 est appliquée sur l'entrée D de la bascule D2 dont la sortie Q délivre le signal ENDC.

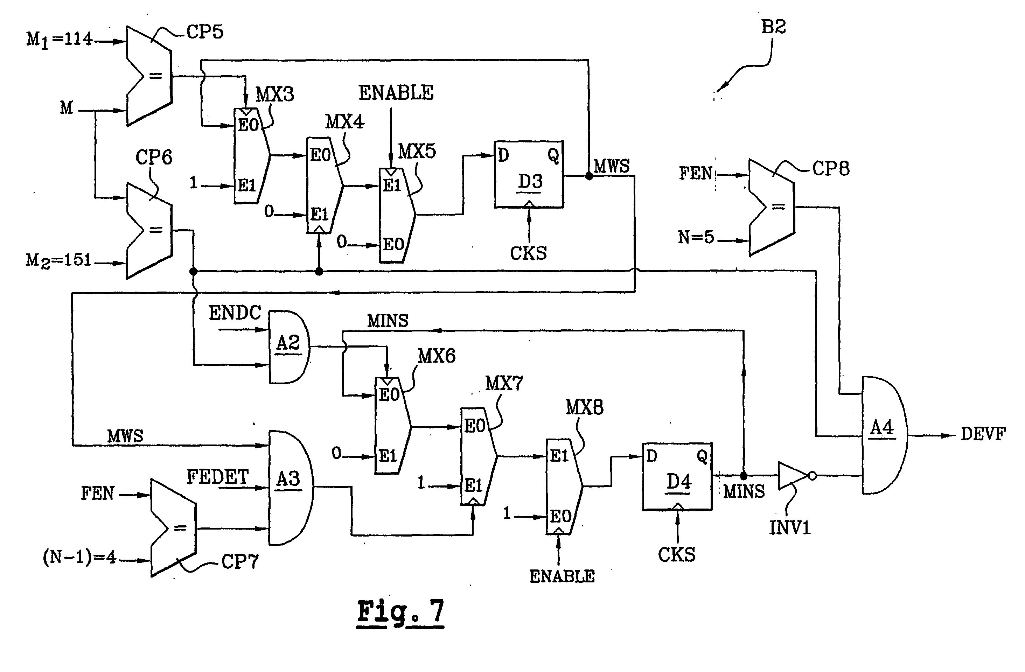

Un exemple de réalisation du bloc B2 est représenté en figure 7. Le bloc B7 comprend les éléments suivants :

- quatre comparateurs logiques CP5 à CP8 à deux entrées chacun,
- six multiplexeurs MX3 à MX8 du type décrit plus haut,
- deux bascules D3, D4 du type décrit plus haut, ayant leur entrée d'horloge cadencée par le signal CKS, et
- une porte ET A2 à deux entrées et deux portes ET A3, A4 à trois entrées.

Le comparateur CP5 reçoit sur ses entrées la consigne M1=114 codée en binaire et le signal de comptage M. Sa sortie est appliquée sur l'entrée de sélection du multiplexeur MX3. Le comparateur CP6 reçoit sur ses entrées la consigne M2=151 codée en binaire et le signal de comptage M. Sa sortie est appliquée sur l'entrée de sélection du multiplexeur MX4. Le multiplexeur MX4 a son entrée E1 maintenue à 0 et son entrée E0 reçoit la sortie du multiplexeur MX3. La sortie du multiplexeur MX4 est appliquée sur l'entrée E1 du multiplexeur MX5 dont l'entrée E0 est maintenue à 0 et dont l'entrée de sélection reçoit le signal ENABLE. La sortie du multiplexeur MX5 est appliquée sur l'entrée D de la bascule D3 dont la sortie Q délivre un signal MWS ("Signal Fenêtre de Mesure"). Le signal MWS est appliqué sur l'entrée E0 du multiplexeur MX3 dont l'entrée E1 est maintenue à 1.

La porte A2 reçoit sur ses entrées la sortie du comparateur CP6 et le signal de fin de comptage ENDC. Le comparateur CP7 reçoit sur ses entrées le signal FEN et la consigne N-1, ici égale à 4. Sa sortie est appliquée sur une entrée de la porte A3 dont les deux autres entrées reçoivent respectivement les signaux FEDET et MWS.

La sortie de la porte A2 est appliquée sur l'entrée de sélection du multiplexeur MX6 et la sortie de la porte A3 est appliquée sur l'entrée de sélection du multiplexeur MX7. Le multiplexeur MX7 reçoit sur son entrée E0 la sortie du multiplexeur MX6 et son entrée E1 est maintenue à 1. Sa sortie est appliquée sur l'entrée E1 du multiplexeur MX8 dont l'entrée E0 est maintenue à 1 et dont l'entrée de sélection est contrôlée par le signal ENABLE. La sortie du multiplexeur MX8 est appliquée sur l'entrée D de la bascule D4 dont la sortie Q délivre un signal MINS ("M INSIDE" soit "M compris dans la fenêtre de mesure"). Le signal MINS est envoyé sur une entrée de la porte A4 par l'intermédiaire d'une porte inverseuse INV1. Le signal MINS est également appliqué sur l'entrée E0 du multiplexeur MX6, dont l'entrée E1 est maintenue à 0. Les deux autres entrées de la porte A4 reçoivent respectivement la sortie du comparateurs CP6 et la sortie du comparateur CP8, ce dernier recevant sur ses entrées le signal FEN et la consigne N=5.

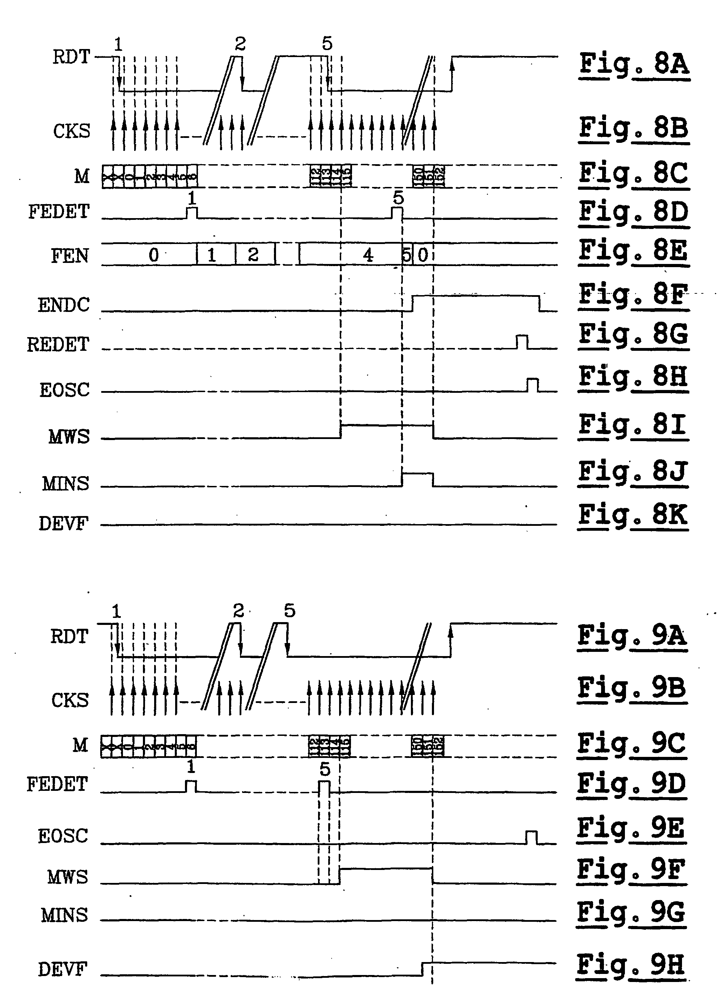

Le fonctionnement du circuit DMC est illustré sur les figures 8A à 8K, qui représentent respectivement :

- figure 8A : les données asynchrones RDT reçues sur la borne RDT,
- figure 8B : le signal d'échantillonnage CKS,
- figure 8C : le signal de comptage M,
- figure 8D : le signal de détection de fronts descendants FEDET,
- figure 8E : le signal FEN de comptage du nombre de fronts descendants,
- figure 8F : le signal de fin de comptage ENDC,
- figure 8G : le signal de détection de fronts montants REDET,
- figure 8H : le signal EOSC indiquant la fin d'un caractère SYNC,
- figure 8I : le signal "fenêtre de mesure" MWS,
- figure 8J : le signal MINS indiquant que M est à l'intérieur de la fenêtre de mesure,
- figure 8K : le drapeau de déviation DEVF.

Dans l'exemple de fonctionnement illustré sur les figures 8A à 8K, on suppose que le signal d'horloge local CK présente une déviation inférieure à $\pm15\%$ relativement au signal d'horloge de référence ayant servi à un émetteur distant (non représenté) à générer le caractère SYNC. Avant le démarrage du processus de mesure de déviation, et de façon en soi classique, la machine d'état SM "sait" qu'un caractère SYNC va être reçu grâce au caractère de break qui est préalablement envoyé par l'émetteur (caractère BRK, Cf. fig. 1). Comme indiqué plus haut, le signal ENABLE est mis à 1 après détection du premier front descendant du caractère SYNC. Il s'agit du front descendant correspondant au bit de start STB, comme on le voit en figure 2, qui est détecté au moyen du signal FEDET.

Fonctionnement du bloc B1

Le compteur CT2 est mis à six lorsque le signal ENABLE passe à 1 (entrée SET6 activée sur front montant) et commence à compter les impulsions du signal d'échantillonnage CKS. A noter que le compteur est calé sur la valeur "6" (septième cycle de comptage à partir de 0) car la détection du premier front descendant du caractère SYNC (qui entraîne le passage à 1 du signal ENABLE) intervient après réception de sept échantillons égaux à 0. Le signal de comptage M délivré par le compteur CT2, codé sur 8 bits, est ainsi représentatif à un instant donné du nombre d'impulsions du signal CKS émis depuis le premier front descendant du caractère de synchronisation SYNC. Parallèlement, le signal FEN délivré par le compteur CT3 représente à un instant donné le nombre de fronts descendants détectés depuis le premier front descendant du caractère de synchronisation SYNC. Le signal FEN5 en sortie du comparateur CP3 passe ici à 1 lorsque 5 fronts descendants ont été comptés. Lorsque le signal FEN5 passe à 1, le "1" présent sur l'entrée E1 du multiplexeur MX1 est sélectionné et est appliqué sur l'entrée D de la bascule D2. Le signal ENDC passe ainsi à 1 lors de l'impulsion suivante du signal CKS (fig. 8F). Après passage à 1 du signal ENDC et lorsque le signal REDET passe à 1 (fig. 8G, détection du front montant suivant, signal SRDT égal au critère "0001111111"), la sortie de la porte A1 passe à 1. Le signal EOSC délivré par la sortie Q de la bascule D1 passe à 1 lors de l'impulsion suivante du signal CK2 (fig. 8H) et l'entrée E1 du multiplexeur MX2 est sélectionnée. La valeur 0 appliquée sur l'entrée E1 est recopiée sur l'entrée D de la bascule D2. Le signal ENDC est ainsi automatiquement remis à 0 (fig. 8F) après détection du premier font montant suivant le cinquième front descendant du caractère SYNC.

Fonctionnement du bloc B2

Le signal MWS délivré par la bascule D3 passe à 1 lorsque le signal de comptage M devient égal à M1, ici 114, et repasse à 0 lorsque le signal de comptage devient égal à M2, ici 151 (fig. 8I).

Le signal MINS passe à 1 (fig. 8J) après que le cinquième (N=5) front descendant du caractère SYNC apparaît (fig. 9D), à la condition que le signal MWS soit égal à 1. En effet dans ce cas la sortie du comparateur CP7 est à 1 car le signal FEN est égal à 4. Le signal FEDET est à 1 et le signal MWS est à 1. La sortie de la porte A3 est ainsi à 1 et aiguille le "1" présent sur l'entrée E1 du multiplexeur MX7 sur l'entrée D de la bascule D4, via le multiplexeur MX8 qui est transparent tant que le signal ENABLE est à 1. Le passage à 1 du signal MINS force à 0 la sortie de la porte INV1.

La sortie de la porte A4 reste à 0 tant que les sorties des comparateurs CP6 et CP8 ne sont pas toutes deux à 1. Lorsque le signal FEN devient égal à 5 et que le signal de comptage M devient égal au seuil supérieur M2=151, les sorties des comparateurs sont égales à 1 et la valeur du drapeau DEVF en sortie de la porte A4 ne dépend que de la sortie de la porte INV1. Ainsi, quand le passage à 1 du signal MINS force à 0 la sortie de la porte INV1, le drapeau de déviation reste égal à 0 (fig. 8K) ce qui signifie que le signal d'horloge local CK, dont la fréquence est un sous-multiple de celle du signal d'échantillonnage CKS, présente une déviation comprise dans la marge de tolérance de ±15% relativement au signal d'horloge de référence.

Le signal MINS est automatiquement remis à zéro après que le signal de comptage M est devenu égal à la consigne M2=151. En effet la sortie du comparateur CP6 passe à 1, le signal ENDC est à 1 et la sortie de la porte A2 passe à 1. La valeur 0 présente sur l'entrée E1 du multiplexeur MX6 est appliquée sur l'entrée E0 du multiplexeur MX7 et se retrouve sur l'entrée D de la bascule D4.

Les figures 9A à 9H illustrent le cas où le signal d'horloge local est trop lent devant le signal d'horloge de référence transmis par le caractère SYNC, et représentent respectivement :

- figure 9A : les données RDT reçues sur la borne RPD,
- figure 98 : le signal d'échantillonnage CKS,
- figure 9C : le signal de comptage M,
- figure 9D : le signal FEDET,
- figure 9E : le signal EOSC,
- figure 9F : le signal MWS,
- figure 9G : le signal MINS,
- figure 9H : le drapeau DEVF.

Dans ce cas, le cinquième front descendant (signal FEDET, fig. 9D) apparaît avant que le signal de comptage ait atteint la valeur M1 (ici lorsque M = 112) et par conséquent avant le passage à 1 du signal MWS (fig. 9F). Le signal MINS reste égal à 0 (fig. 9G) et la sortie de la porte INV1 reste égale à 1. Lorsque les sorties des comparateurs CP6 et CP8 passent à 1, les trois entrées de la porte A4 sont à 1 et le drapeau DEVF passe à 1, indiquant une déviation supérieure à la marge de tolérance.

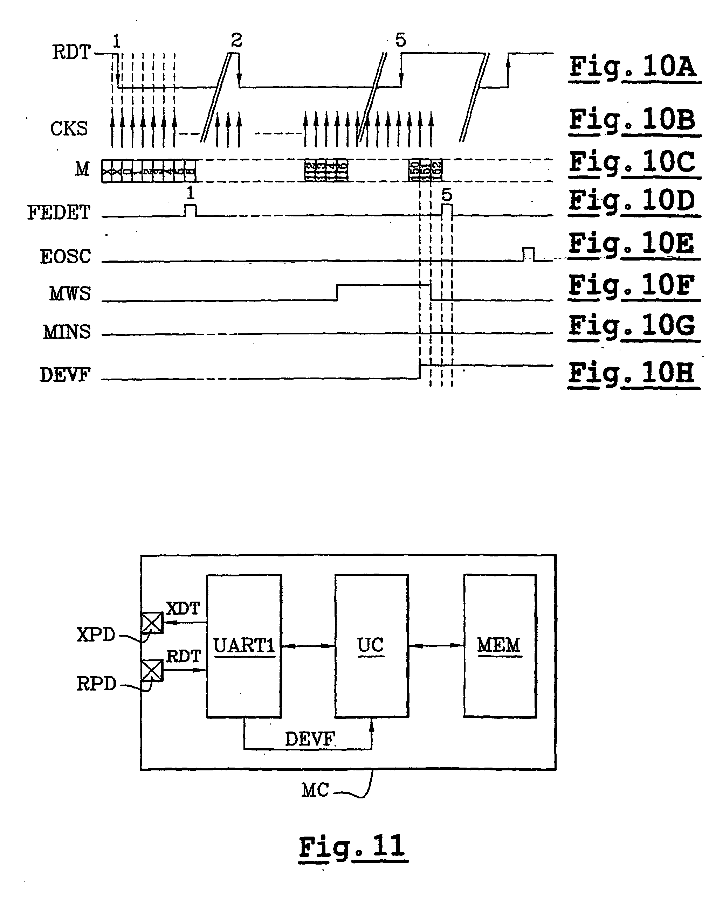

Les figures 10A à 10H illustrent le cas où le signal d'horloge local est trop rapide devant le signal d'horloge de référence, et représentent respectivement :

- figure 10A : les données RDT reçues sur la borne RPD,
- figure 10B : le signal d'échantillonnage CKS,
- figure 10C : le signal de comptage M,
- figure 10D : le signal FEDET,
- figure 10E : le signal EOSC,
- figure 10F : le signal MWS,
- figure 10G : le signal MINS,
- figure 10H : le drapeau de déviation DEVF.

Dans ce cas, le cinquième front descendant (signal FEDET, fig. 10D) apparaît après que le signal de comptage a atteint la valeur M2 (ici lorsque M = 162) et par conséquent lorsque le signal MWS est revenu à 0 (fig. 10F). Le signal MINS reste égal à 0 (fig. 10G) et la sortie de la porte INV1 reste égale à 1. Lorsque les sorties des comparateurs CP6 et CP8 passent à 1, les trois entrées de la porte A4 sont à 1 et le drapeau DEVF passe à 1, indiquant une déviation supérieure à la marge de tolérance.

En pratique, un circuit de mesure de déviation selon l'invention constitue un moyen simple, peu coûteux et peu encombrant en termes de surface de silicium, pour détecter un problème de synchronisation. Il est à ce titre susceptible de diverses applications.

Le circuit de mesure de déviation selon l'invention permet à un récepteur de trames asynchrones de vérifier que la déviation de son horloge locale n'a pas atteint la limite fixée. Si cela est le cas, le récepteur ne doit pas prendre en compte la trame reçue et notamment les caractères de données qui suivent le caractère SYNC. Ainsi, un récepteur équipé d'un circuit selon l'invention ne perd pas de temps à traiter de mauvaises trames ou a exécuter des instructions erronées. Un tel récepteur ne perturbe pas le réseau auquel il est connecté car il ne répond pas à des instructions erronées. Il se remet simplement en attente d'un nouveau début de trame. Au terme d'un certain nombre d'échecs, il peut également se déclarer défectueux et se couper provisoirement du réseau.

Un autre mode de réalisation du circuit DMC selon l'invention consiste à prévoir une détection de déviation entre fronts descendants successifs (une détection entre fronts montants successifs étant également envisageable). Dans ce cas, la consigne N appliqué au comparateur CP3 est égale à 2 et correspond à 2 cycles de l'horloge de référence. Les seuils M1 et M2 sont par exemple égaux à 36 et 38 (pour 32 cycles d'échantillonnage entre deux fronts opposés, une marge de tolérance de ±15%, et en tenant compte du décalage de 7 cycles d'échantillonnage intervenant lors de la détection des fronts). Une erreur de déviation est détectée lorsque le nombre M d'impulsions du signal d'échantillonnage CKS entre deux fronts descendants du caractère de synchronisation est inférieur à 36 ou supérieur à 38.

Encore un autre mode de réalisation consiste à contrôler le nombre M d'impulsions d'échantillonnage intervenant entre chaque front montant et chaque front descendant et entre chaque front descendant et chaque front montant du caractère SYNC. Le seuil M1 est par exemple égal à 18 et le seuil M2 égal à 19 (pour 16 cycles d'échantillonnage entre deux fronts opposés, une marge de tolérance de ±15%, et en tenant compte du décalage de 7 cycles d'échantillonnage intervenant lors de la détection des fronts). Dans ce cas, le compteur CT2 (fig. 6) reçoit sur son entrée SET 6 un signal indiquant chaque détection d'un front montant ou descendant. Ceci est obtenu simplement en appliquant sur l'entrée SET6 du compteur CT2 la sortie d'une porte OU recevant en entrée les signaux FEDET et REDET. D'autre part, l'entrée d'horloge du compteur CT3 reçoit les signaux FEDET et REDET et le compteur CT3 est remis à 1 quand sa sortie passe à 2 afin d'assurer une détection de front montant à front descendant et de front descendant à front montant. Le nombre N est égal à 2 à l'entrée du comparateur CP3 mais correspond ici à un seul cycle de l'horloge de référence, puisque les fronts descendants et les fronts montants sont comptés.

Par ailleurs, la détection de chaque front descendant et/ou de chaque front montant peut être sécurisée en vérifiant, après chaque détection, que le bit majoritaire délivré par le circuit AVCC (fig.3) est à 0 ou à 1, respectivement. Cette vérification est obtenue simplement en logique câblée en combinant dans une porte ET le signal FEDET avec le bit majoritaire inversé, la sortie dé la porte ET délivrant un signal de détection de front descendant sécurisé SFEDET qui est utilisé à la place du signal FEDET dans le circuit DMC. De même, le signal REDET peut être combiné dans une porte ET avec le bit majoritaire (non inversé), la sortie de la porte ET délivrant un signal de détection de front montant sécurisé SREDET qui est utilisé à la place du signal REDET dans le circuit DMC.

En définitive, la présente invention permet de comparer aux seuils M1 et M2 le nombre M de périodes du signal d'échantillonnage CKS intervenant pendant K périodes du signal SYNC, K pouvant être égal à 1 (détection entre deux fronts opposés), ou égal à 2 (détection entre deux fronts de même nature) voire plus et au maximum égal au nombre de cycles d'horloge prévus dans le caractère SYNC (K=20 et N=5 dans l'exemple décrit plus haut).

Il apparaît également que, dans la présente description et dans les revendications, le terme "mesure de déviation d'horloge" est revêtu d'une signification relative car une détection d'erreur entre deux fronts successifs opposés ou entre deux fronts successifs de même nature, peut être due à une trop forte déviation de l'horloge locale mais peut également être due à la présence d'une donnée invalide à l'intérieur du caractère SYNC, par exemple un bit à 0 ou à 1 dont la durée est trop longue ou au contraire trop courte. La présente invention permet donc également de détecter une corruption de données intervenant dans le caractère de synchronisation, due par exemple à un dysfonctionnement du côté de l'émetteur.

Un circuit DMC selon l'invention peut donc être prévu pour cumuler plusieurs vérifications, par exemple une vérification du nombre de cycles du signal d'échantillonnage intervenant entre le premier et le dernier fronts descendants (ou montant) du signal SYNC et d'autre part une vérification du nombre de cycles du signal d'échantillonnage intervenant entre chaque front montant et chaque front descendant et/ou entre chaque front descendant et chaque front montant du signal SYNC.

La figure 11 illustre un exemple de mise en oeuvre de la présente invention et représente schématiquement un microcontrôleur MC comprenant sur une même puce de silicium une unité centrale UC, une mémoire programme MEM, et un circuit UART1 selon l'invention. Le circuit UART1 est connecté à des plages d'entrée/sortie RPD/XPD du circuit intégré. L'unité centrale UC utilise le circuit UART1 pour l'émission et la réception de données asynchrones via les plages XPD, RPD. Le drapeau DEVF est appliqué sur une entrée de l'unité centrale UC et est envoyé sur l'entrée d'un décodeur d'interruption (non représenté).

## Revendications

1. Dispositif de transmission de données asynchrones (UART1) comprenant un registre (SREG1) de réception de données (RDT) relié à une borne (RPD) de réception de données et cadencé par un signal d'échantillonnage (CKS) synchronisé à un signal d'horloge local (CK),
   **caractérisé en ce qu'**il comprend un circuit de mesure de déviation d'horloge (DMC, B1, B2) agencé pour déterminer un nombre M de périodes du signal d'échantillonnage (CKS) apparaissant pendant K périodes d'un signal de synchronisation (SYNC) reçu sur la borne de réception de données, et pour comparer le nombre M à un seuil inférieur M1 et à un seuil supérieur M2 prédéterminés définissant une marge de tolérance.

2. Dispositif selon la revendication 1, dans lequel le circuit de mesure de déviation d'horloge comprend des moyens (B2, CP7, A2-A4, MX6-MX8, D4) pour délivrer un drapeau de déviation (DEVF) ayant une première valeur logique lorsque le nombre M n'est pas compris entre les seuils M1 et M2 et une seconde valeur logique lorsque le nombre M est compris entre les seuils M1 et M2.

3. Dispositif selon l'une des revendications 1 et 2, dans lequel le circuit de mesure de déviation d'horloge comprend :

   - des moyens (B1, CT3) pour délivrer un premier signal logique (FEN5) ayant une valeur logique déterminée lorsque le nombre de périodes du signal de synchronisation est égal à K,
   - des moyens (B2, CP5, CP6, MX3, MX4, D3) pour délivrer un second signal logique (MWS) ayant une valeur logique déterminée lorsque le nombre M de périodes du signal d'échantillonnage est compris entre les seuils M1 et M2,
   - des moyens pour délivrer un troisième signal logique (MINS) ayant une valeur logique déterminée lorsque le premier (FEN5) et le second (MWS) signaux logiques présentent respectivement lesdites valeurs déterminées.

4. Dispositif selon l'une des revendications 1 à 3, dans lequel le circuit de mesure de déviation d'horloge est agencé pour déterminer un nombre M de périodes du signal d'échantillonnage (CKS ) apparaissant entre deux fronts d'un même type, montant ou descendant, du signal de synchronisation (SYNC).

5. Dispositif selon l'une des revendications 1 à 3, dans lequel le circuit de mesure de déviation d'horloge est agencé pour déterminer un nombre M de périodes du signal d'échantillonnage (CKS) apparaissant entre deux fronts de type opposé, montant et descendant ou descendant et montant, du signal de synchronisation (SYNC).

6. Dispositif selon l'une des revendications 4 et 5, dans lequel le circuit de mesure de déviation d'horloge comprend des moyens pour vérifier que la détection d'un front montant ou descendant correspond à la réception de plusieurs échantillons du signal de synchronisation ayant une valeur logique majoritaire correspondant au front détecté.

7. Dispositif selon l'une des revendications 1 à 6, dans lequel le circuit de mesure de déviation d'horloge est réalisé essentiellement à partir de portes logiques, de bascules, de comparateurs logiques et de compteurs.

8. Dispositif selon l'une des revendications 1 à 7, comprenant une machine d'état (SM) agencée pour détecter la réception d'un caractère de synchronisation (SYNC) sur la borne de réception (RPD) et pour activer le circuit de mesure de déviation d'horloge (DMC) lorsqu'un tel caractère de synchronisation est détecté.

9. Circuit intégré (MC), comprenant un dispositif de transmission de données (UART1) selon l'une des revendications 1 à 8.

10. Microcontrôleur, comprenant un dispositif de transmission de données (UART1) selon l'une des revendications 1 à 6.

11. Procédé de transmission de données asynchrones, dans lequel des données reçues sur une borne (RPD) de réception de données (RDT) sont lues au rythme d'un signal d'échantillonnage (CKS) synchronisé à un signal d'horloge local (CK), **caractérisé en ce qu'**il comprend une étape de mesure d'une déviation du signal d'horloge local comprenant :

    - la détermination d'un nombre M de périodes du signal d'échantillonnage (CKS) apparaissant pendant K périodes d'un signal de synchronisation (SYNC) reçu sur la borne de réception de données,
    - la comparaison du nombre M à un seuil inférieur M1 et à un seuil supérieur M2 prédéterminés définissant une marge de tolérance.

12. Procédé selon la revendication 11, comprenant la délivrance d'un drapeau de déviation (DEVF) ayant une première valeur logique lorsque le nombre M n'est pas compris entre les seuils M1 et M2 et une seconde valeur logique lorsque le nombre M est compris entre les seuils M1 et M2.

13. Procédé selon l'une des revendications 11 et 12, comprenant les étapes suivantes :

   - délivrance d'un premier signal logique (FEN5) ayant une valeur logique déterminée lorsque le nombre de périodes du signal de synchronisation est égal à K,
   - délivrance d'un second signal logique (MWS) ayant une valeur logique déterminée lorsque le nombre M de périodes du signal d'échantillonnage est compris entre les seuils M1 et M2,
   - délivrance d'un troisième signal logique (MINS) ayant une valeur logique déterminée lorsque le premier (FEN5) et le second (MWS) signaux logiques présentent respectivement lesdites valeurs déterminées.

14. Procédé selon l'une des revendications 11 à 13, dans lequel le nombre M de périodes du signal d'échantillonnage (CKS) est déterminé entre deux fronts d'un même type, montant ou descendant, du signal de synchronisation (SYNC).

15. Procédé selon l'une dès revendications 11 à 13, dans lequel le nombre M de périodes du signal d'échantillonnage (CKS) est déterminé entre deux fronts de type opposé, montant et descendant ou descendant et montant, du signal de synchronisation (SYNC).

16. Procédé selon l'une des revendications 14 et 15, comprenant la vérification que la détection d'un front montant ou descendant correspond à la réception de plusieurs échantillons du signal de synchronisation ayant valeur logique majoritaire correspondant au front détecté.

17. Procédé selon l'une des revendications 11 à 16, comprenant une étape de détection de la réception d'un caractère de synchronisation (SYNC) sur la borne de réception (RPD) et, sur détection de la réception du. caractère de synchronisation, le déclenchement d'une étape de détermination d'un nombre M de périodes du signal d'échantillonnage (CKS) apparaissant pendant K périodes du caractère de synchronisation.

18. Procédé selon l'une des revendications 11 à 17, mis en oeuvre essentiellement au moyen de portes logiques, de bascules, de comparateurs logiques et de compteurs.

19. Procédé selon l'une des revendications 11 à 18, mis en oeuvre au moyen d'un circuit spécifique à logique câblée (DMC) implanté dans un dispositif de transmission de données asynchrones (UART1).

**Patentansprüche**

1. Asynchrone Datenübertragungsanordnung (UART1), umfassend ein Register (SREG1) für den Empfang von Daten (RDT), das mit einer Klemme (RPD) für den Empfang von Daten verbunden und durch ein Abtastsignal (CKS), das mit einem lokalen Zeitsignal (CK) synchronisiert ist, taktgesteuert ist, **dadurch gekennzeichnet, dass** sie eine Schaltung zur Messung der Taktabweichung (DMC, B1, B2) umfasst, die derart angeordnet ist, dass sie eine Anzahl M von Perioden des Abtastsignals (CKS) bestimmt, das während K Perioden eines Synchronisationssignals (SYNC) erscheint, das an der Datenempfangsklemme empfangen wird, und dass sie die Anzahl M mit einer vorbestimmten unteren Grenze M1 und oberen Grenze M2 vergleicht, die einen Toleranzbereich definieren.

2. Anordnung nach Anspruch 1, bei der die Schaltung zur Messung der Taktabweichung Mittel (B2, CP7, A2-A4, MX6-MX8, D4) umfasst, um einen Abweichungsindikator (DEVF) zu liefern, der einen ersten logischen Wert hat, wenn die Anzahl M nicht innerhalb der Grenzen M1 und M2 liegt, und einen zweiten logischen Wert, wenn die Anzahl M zwischen den Grenzen M1 und M2 liegt.

3. Anordnung nach einem der Ansprüche 1 und 2, bei der die Schaltung zur Messung der Taktabweichung umfasst:

   - Mittel (B1, CT3), um ein erstes logisches Signal (FEN5) zu liefern, das einen bestimmten logischen Wert hat, wenn die Anzahl von Perioden des Synchronisationssignals gleich K ist,

   - Mittel (B2, CP5, CP6, MX3, MX4, D3), um ein zweites logisches Signal (MWS) zu liefern, das einen bestimmten logischen Wert hat, wenn die Anzahl M von Perioden des Abtastsignals zwischen den Grenzen M1 und M2 liegt,

   - Mittel, um ein drittes logisches Signal (MINS) zu liefern, das einen bestimmten logischen Wert hat, wenn das erste (FEN5) und das zweite (MWS) der logischen Signale jeweils die bestimmten Werte aufweisen.

4. Anordnung nach einem der Ansprüche 1 bis 3, bei der die Schaltung zur Messung der Taktabweichung derart angeordnet ist, dass sie eine Anzahl M von Perioden des Abtastsignals (CKS) bestimmt, die zwischen zwei Fronten eines selben Typs, aufsteigend oder absteigend, des Synchronisationssignals (SYNC) auftreten.

5. Anordnung nach einem der Ansprüche 1 bis 3, bei der die Schaltung zur Messung der Taktabweichung derart angeordnet ist, dass sie eine Anzahl M von Perioden des Abtastsignals (CKS) bestimmt, die zwischen zwei Fronten entgegen gesetzten Typs, aufsteigend und absteigend oder absteigend und aufsteigend, des Synchronisationssignals (SYNC) auftreten.

6. Anordnung nach einem der Ansprüche 4 und 5, bei der die Schaltung zur Messung der Taktabweichung Mittel umfasst, um zu überprüfen, ob die Erfassung einer aufsteigenden oder absteigenden Front dem Empfang von mehreren Proben des Synchronisationssignals entspricht, mit einem mehrheitlichen logischen Wert, der der erfassten Front entspricht.

7. Anordnung nach einem der Ansprüche 1 bis 6, bei der die Schaltung zur Messung der Taktabweichung im Wesentlichen aus logischen Türen, Kippschaltungen, logischen Komparatoren und Zählern verwirklicht ist.

8. Anordnung nach einem der Ansprüche 1 bis 7, umfassend eine Zustandmaschine (SM), die derart angeordnet ist, dass sie den Empfang eines Synchronisationszeichens (SYNC) an der Empfangsklemme (RPD) erfasst und die Schaltung zur Messung einer Taktabweichung (DMC) aktiviert, wenn ein solches Synchronisationszeichen erfasst wird.

9. Integrierte Schaltung (MC), umfassend eine Datenübertragungsanordnung (UART1) nach einem der Ansprüche 1 bis 8.

10. Mikrokontroller, umfassend eine Datenübertragungsanordnung (UART1) nach einem der Ansprüche 1 bis 6.

11. Asynchrones Datenübertragungsverfahren, bei dem die an einer Klemme (RPD) für den Datenempfang (RDT) empfangenen Daten im Rhythmus eines Abtastsignals (CKS), das mit einem lokalen Zeitsignal (CK) synchronisiert ist, gelesen werden, **dadurch gekennzeichnet, dass** es einen Schritt der Messung der Abweichung des lokalen Zeitsignals aufweist, umfassend:

- die Bestimmung einer Anzahl M von Perioden des Abtastsignals (CKS), die während K Perioden eines Synchronisationssignals (SYNC) auftreten, das an der Datenempfangsklemme empfangen wird,

- den Vergleich der Anzahl M mit einer vorbestimmten unteren Grenze M1 und oberen Grenze M2, die einen Toleranzbereich definieren.

12. Verfahren nach Anspruch 11, umfassend die Lieferung eines Abweichungsindikators (DEVF), der einen ersten logischen Wert hat, wenn die Anzahl M nicht innerhalb der Grenzen M1 und M2 liegt, und einen zweiten logischen Wert, wenn die Anzahl M zwischen den Grenzen M1 und M2 liegt.

13. Verfahren nach einem der Ansprüche 11 und 12, umfassend die folgenden Schritte:

- Lieferung eines ersten logischen Signals (FEN5) mit einem ersten bestimmten logischen Wert, wenn die Anzahl von Perioden des Synchronisationssignals gleich K ist,

- Lieferung eines zweiten logischen Signals (MWS) mit einem bestimmten logischen Wert, wenn die Anzahl M von Perioden des Abtastsignals zwischen den Grenzen M1 und M2 liegt,

- Lieferung eines dritten logischen Signals (MINS) mit einem bestimmten logischen Wert, wenn das erste (FEN5) und das zweite (MWS) logische Signal jeweils die bestimmten Werte aufweisen.

14. Verfahren nach einem der Ansprüche 11 bis 13, bei dem die Anzahl M von Perioden des Abtastsignals (CKS) zwischen zwei Fronten eines selben Typs, aufsteigend oder absteigend, des Synchronisationssignals (SYNC) bestimmt wird.

15. Verfahren nach einem der Ansprüche 11 bis 13, bei dem die Anzahl M von Perioden des Abtastsignals (CKS) zwischen zwei Fronten von entgegen gesetzten Typen, aufsteigend und absteigend oder absteigend und aufsteigend, des Synchronisationssignals (SYNC) bestimmt wird.

16. Verfahren nach einem der Ansprüche 14 und 15, umfassend die Überprüfung, ob die Erfassung einer aufsteigenden oder absteigenden Front dem Empfang von mehreren Proben des Synchronisationssignals entspricht, mit einem mehrheitlichen logischen Wert, der der erfassten Front entspricht.

17. Verfahren nach einem der Ansprüche 11 bis 16, umfassend einen Schritt der Erfassung des Empfangs eines Synchronisationszeichens (SYNC) an der Empfangsklemme (RPD) und bei Erfassung des Empfangs des Synchronisationszeichens die Auslösung eines Schrittes zur Bestimmung einer Anzahl M von Perioden des Abtastsignals (CKS), das während K Perioden des Synchronisationszeichens auftritt.

18. Verfahren nach einem der Ansprüche 11 bis 17, das im Wesentlichen mittels logischer Türen, Kippschaltungen, logischer Komparatoren und Zählern eingesetzt wird.

19. Verfahren nach einem der Ansprüche 11 bis 18, das mittels einer spezifischen Schaltung mit verkabelter Logik (DMC) eingesetzt wird, die in eine asynchrone Datenübertragungseinheit (UART1) eingesetzt ist.

**Claims**

1. An asynchronous data transmission device (UART1) comprising a register (SREG1) for receiving data (RDT) connected to a terminal (RPD) for receiving data and clocked by a sampling signal (CKS) that is synchronised with a local clock signal (CK),

   **characterised in that** it comprises a clock deviation measuring circuit (DMC, B1, B2) arranged for determining a number M of periods of the sampling signal (CKS) appearing during K periods of a synchronisation signal (SYNC) received on the data receiving terminal, and for comparing the number M to a predetermined lower threshold M1 and to a predetermined upper threshold M2 defining a tolerance margin.

2. Device according to claim 1, wherein the clock deviation measuring circuit comprises means (B2, CP7, A2-A4, MX6-MX8, D4) for delivering a deviation flag (DEVF) having a first logic value when the number M is not between the thresholds M1 and M2 and a second logic value when the number M is between the thresholds M1 and M2.

3. Device according to one of claims 1 and 2, wherein the clock deviation measuring circuit comprises:

   - means (B1, CT3) for delivering a first logic signal (FEN5) having a determined logic value when the number of periods of the synchronisation signal is equal to K,
   - means (B2, CP5, CP6, MX3, MX4, D3) for delivering a second logic signal (MWS) having a determined logic value when the number M of periods of the sampling signal is between the thresholds M1 and M2,
   - means for delivering a third logic signal (MINS) having a determined logic value when the first (FENS) and the second (MWS) logic signals respectively have said determined values.

4. Device according to one of claims 1 to 3, wherein the clock deviation measuring circuit is arranged for determining a number M of periods of the sampling signal (CKS) appearing between two edges of a same type, rising or falling, of the synchronisation signal (SYNC).

5. Device according to one of claims 1 to 3, wherein the clock deviation measuring circuit is arranged for determining a number M of periods of the sampling signal (CKS) appearing between two edges of opposite type, rising and falling or falling and rising, of the synchronisation signal (SYNC).

6. Device according to one of claims 4 and 5, wherein the clock deviation measuring circuit comprises means for verifying that the detection of a rising or falling edge corresponds to the reception of several samples of the synchronisation signal having a majority logic value corresponding to the edge detected.

7. Device according to one of claims 1 to 6, wherein the clock deviation measuring circuit is produced essentially from logic gates, flip-flops, logic comparators and counters.

8. Device according to one of claims 1 to 7, comprising a status machine (SM) arranged for detecting the reception of a synchronisation character (SYNC) on the reception terminal (RPD) and for activating the clock deviation measuring circuit (DMC) when such a synchronisation character is detected.

9. An integrated circuit (MC), comprising a device for transmitting data (UART1) according to one of claims 1 to 8.

10. A microcontroller, comprising a device for transmitting data (UART1) according to one of claims 1 to 6.

11. A method for transmitting asynchronous data, wherein data received on a terminal (RPD) for receiving data (RDT) is read at the rate of a sampling signal (CKS) that is synchronised with a local clock signal (CK), **characterised in that** it comprises a step of measuring a deviation of the local clock signal comprising:

    - the determination of a number M of periods of the sampling signal (CKS) appearing during K periods of a synchronisation signal (SYNC) received on the data receiving terminal,
    - the comparison of the number M to a lower threshold M1 and to an upper threshold M2, both predetermined, defining a tolerance margin.

12. Method according to claim 11, comprising the delivery of a deviation flag (DEVF) having a first logic value when the number M is not between the thresholds M1 and M2 and a second logic value when the number M is between the thresholds M1 and M2.

13. Method according to one of claims 11 and 12, comprising the following steps:

   - delivery of a first logic signal (FEN5) having a determined logic value when the number of periods of the synchronisation signal is equal to K,
   - delivery of a second logic signal (MWS) having a determined logic value when the number M of periods of the sampling signal is between the thresholds M1 and M2,
   - delivery of a third logic signal (MINS) having a determined logic value when the first (FENS) and the second (MWS) logic signals respectively have said determined values.

14. Method according to one of claims 11 to 13, wherein the number M of periods of the sampling signal (CKS) is determined between two edges of a same type, rising or falling, of the synchronisation signal (SYNC).

15. Method according to one of claims 11 to 13, wherein the number M of periods of the sampling signal (CKS) is determined between two edges of opposite type, rising and falling or falling and rising, of the synchronisation signal (SYNC).

16. Method according to one of claims 14 and 15, comprising verifying that the detection of a rising or falling edge corresponds to the reception of several samples of the synchronisation signal having a majority logic value corresponding to the edge detected.

17. Method according to one of claims 11 to 16, comprising a step of detecting the reception of a synchronisation character (SYNC) on the reception terminal (RPD) and, upon detecting the reception of the synchronisation character, triggering a step of determining a number M of periods of the sampling signal (CKS) appearing during K periods of the synchronisation character.

18. Method according to one of claims 11 to 17, implemented essentially by means of logic gates, flip-flops, logic comparators and counters.

19. Method according to one of claims 11 to 18, implemented by means of a specific hard-wired logic circuit (DMC) implanted in an asynchronous data transmission device (UART1).

Fig. 1

Fig. 2

[55]h

RDT — Fig. 4A

CKS — Fig. 4B

SCOUNT — Fig. 4C

SRDT — Fig. 4D

FEDET — Fig. 4E

14

**Fig. 3**

**Fig. 5**

**Fig. 6**

**Fig. 7**

RDT — **Fig. 8A**

CKS — **Fig. 8B**

M — **Fig. 8C**

FEDET — **Fig. 8D**

FEN — **Fig. 8E**

ENDC — **Fig. 8F**

REDET — **Fig. 8G**

EOSC — **Fig. 8H**

MWS — **Fig. 8I**

MINS — **Fig. 8J**

DEVF — **Fig. 8K**

RDT — **Fig. 9A**

CKS — **Fig. 9B**

M — **Fig. 9C**

FEDET — **Fig. 9D**

EOSC — **Fig. 9E**

MWS — **Fig. 9F**

MINS — **Fig. 9G**

DEVF — **Fig. 9H**

Fig. 10A

Fig. 10B

Fig. 10C

Fig. 10D

Fig. 10E

Fig. 10F

Fig. 10G

Fig. 10H

Fig. 11